# EUROPEAN PATENT APPLICATION

(11) **EP 3 544 338 A1**
(43) Date of publication of application: **25.09.2019**
(21) Application number: 19163842.8
(22) Date of filing: 19.03.2019
(51) Int. Cl.: H04W 52/02, H04W 4/80, H04W 8/00, H04W 84/18

(54) **WIRELESS COMMUNICATION DEVICE, WIRELESS COMMUNICATION METHOD, AND PROGRAM**

(30) Priority: 23.03.2018 JP 2018055929
(71) Applicant: Casio Computer Co., Ltd., Tokyo 151-8543 (JP)
(72) Inventor: TOMIDA, Takahiro, Tokyo, 205-8555 (JP); TERAZAKI, Tsutomu, Tokyo, 205-8555 (JP); TAKAHASHI, Toshihiro, Tokyo, 205-8555 (JP)
(74) Representative: Plougmann Vingtoft a/s

(57) **Abstract**

A wireless communication device (100) includes a wireless communicator (103) that wirelessly communicates with other wireless communication device (200), and a processor (101). The processor (101) controls the wireless communicator (103) to broadcast first transmission information on which data with a first maximum size is deliverable, and controls, upon the wireless communicator (103) receiving a request in response to the first transmission information from the other wireless communication device (200) that received the first transmission information, the wireless communicator (103) to transmit second transmission information on which data with a second maximum size is deliverable to the other wireless communication device (200). The second maximum size is larger than the first maximum size.

## Description

This application relates generally to a wireless communication device, a wireless communication method, and a program.

Conventionally, in Bluetooth (registered trademark) Low Energy (BLE) that is one of the short-range wireless communication standards, a slave device intermittently broadcasts advertisement packets at a predetermined time interval so as to cause a master device to find the this slave device (see, for example, Unexamined Japanese Patent Application Kokai Publication No. 2012-142877).

According to the conventional BLE, advertising data of 31 bytes at maximum can be delivered on the advertisement packets, but according to the new version (Bluetooth (registered trademark) 5) opened to the public on December 2016, the advertising data of 254 bytes at maximum can be delivered on the advertisement packets. However, regardless of the presence or absence of a device that receives the advertisement packets, keeping broadcasting the advertisement packets that contains a large amount of data results in wasteful power consumption. Also, in order to suppress the power consumption, when the time interval to broadcast the advertisement packets is expanded, since the amount of data on the advertisement packets is large, a time necessary for a cycle of the intermittent operation is likely to become long, and thus a response for information transmission decreases.

A wireless communication device according to a first preferable aspect includes:
a wireless communicator that wirelessly communicates with other wireless communication device; and
a processor that
   controls the wireless communicator to broadcast first transmission information on which data with a first maximum size is deliverable, and
   controls, upon the wireless communicator receiving a request in response to the first transmission information from the other wireless communication device that received the first transmission information, the wireless communicator to transmit second transmission information on which data with a second maximum size is deliverable to the other wireless communication device, the second maximum size being larger than the first maximum size.

A wireless communication device according to a second preferable aspect includes:
a wireless communicator that wirelessly communicates with other wireless communication device; and
a processor that
   controls the wireless communicator to receive first transmission information on which data with a first maximum size is deliverable, the first transmission information being broadcasted from the other wireless communication device,
   controls the wireless communicator to transmit a request in response to the received first transmission information, and
   controls the wireless communicator to receive, from the other wireless communication device that received the request, second transmission information on which data with a second maximum size is deliverable, the second maximum size being larger than the first maximum size.

A more complete understanding of this application can be obtained when the following detailed description is considered in conjunction with the following drawings, in which:
FIG. 1 is a diagram illustrating an example of a structure of a wireless communication system according to an embodiment;
FIG. 2 is a block diagram illustrating a structure of a beacon device according to the embodiment;
FIG. 3 is a block diagram illustrating a structure of a smartphone according to the embodiment;
FIG. 4 is a diagram illustrating an example of a structure of advertisement packets;
FIG. 5 is a diagram illustrating an example of a structure of scan response packets;
FIG. 6 is a diagram illustrating an example of a structure of extended advertisement packets;
FIG. 7 is a sequence diagram illustrating an example of an advertisement operation by the wireless communication system according to the embodiment;
FIG. 8 is a flowchart illustrating an example of a process flow for an advertisement transmitting control executed by a CPU of the beacon device according to the embodiment;
FIG. 9 is a flowchart illustrating an example of a process flow for an advertisement receiving control executed by a CPU of a smartphone according to the embodiment; and
FIG. 10 is a diagram illustrating an example of a structure of advertisement packets according to a modified example.

Embodiments will be described below with reference to the accompanying drawings.

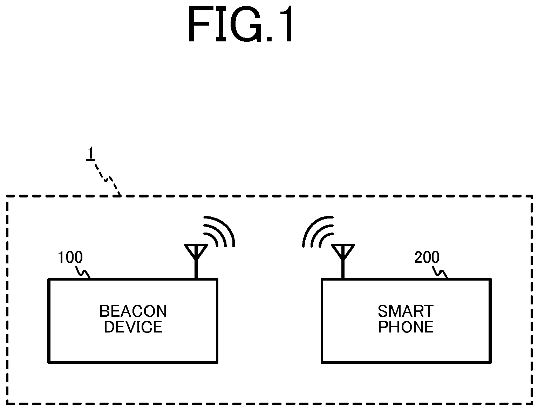

FIG. 1 is a diagram illustrating an example of a structure of a wireless communication system 1 according to an embodiment. According to the example structure illustrated in FIG. 1, the wireless communication system 1 includes a beacon device 100 and a smartphone 200. The beacon device 100 and the smartphone 200 wirelessly communicate with each other based on Bluetooth (registered trademark) Low Energy (below, BLE). The term BLE is a standard for the purpose of low power consumption in a short-range wireless communication standard that is called Bluetooth (registered trademark). Moreover, according to this embodiment, the beacon device 100 and the smartphone 200 are assumed to operate in accordance with Bluetooth (registered trademark) 5 standard. According to this embodiment, based on the BLE, the beacon device 100 operates as a slave that transmits advertisement packets to be described later, and the smartphone 200 operates as a master that receives the advertisement packets.

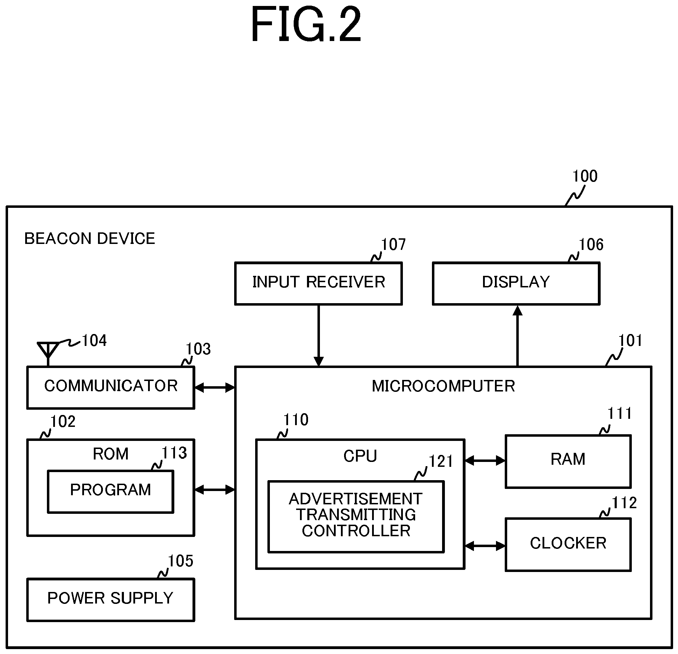

Next, a hardware configuration of the beacon device 100 according to the embodiment will be described with reference to FIG. 2. FIG. 2 is a block diagram illustrating a structure of the beacon device 100 according to the embodiment. The beacon device 100 includes a microcomputer 101, a Read Only Memory (ROM) 102, a communicator 103, an antenna 104, a power supply 105, a display 106, and an input receiver 107.

The microcomputer 101 includes a Central Processing Unit (CPU) 110 as a processor, a Random Access Memory (RAM) 111 as a memory apparatus, and a clocker 112. In addition, the RAM 111 and the clocker 112 may be provided outside the microcomputer 101 instead of the interior of the microcomputer 101. Also, the ROM 102, the communicator 103, the antenna 104, and the power supply 105 may be provided inside the microcomputer 101 instead of the exterior of the microcomputer 101.

The CPU 110 is a processor that executes various arithmetic processes and comprehensively controls the entire operation of the beacon device 100. The CPU 110 reads a control program from the ROM 102 and loads the read program in the RAM 111 to execute various operation processes, such as arithmetic controls on various functions and displaying. The CPU 110 controls the communicator 103 for data communication with the smartphone 200.

The RAM 111 is a volatile memory, such as a Static Random Access Memory (SRAM) or a Dynamic Random Access Memory (DRAM). The RAM 111 stores temporary data, and also stores various setting data.

The clocker 112 includes an oscillating circuit, a frequency divider circuit, and a clock circuit, and keeps a current time.

The ROM 102 is a non-volatile memory, or the like, and stores the control program and initial setting data. The control program contains a program 113 relating to the control for various processes to control a wireless communication with the smartphone 200.

The communicator 103 includes, for example, a radio frequency (RF) circuit, a baseband (BB) circuit, and a memory circuit. The communicator 103 demodulates, decodes, and the like, wireless signals received via the antenna 104, and sends such signals to the CPU 110. The communicator 103 modulates, encodes, and the like, signals sent from the CPU 110, and transmits such signals to the exterior via the antenna 104. According to this embodiment, the communicator 103 is realized by a Bluetooth (registered trademark) controller that transmits and receives the wireless signals based on the BLE.

The power supply 105 includes, for example, batteries and a voltage converter circuit. The power supply 105 supplies the power at the operating voltage of each component in the beacon device 100. An example applied battery of the power supply 105 is a primary battery like a button-shape battery, or a secondary battery like a lithium-ion battery.

The display 106 includes, for example, a Light Emitting Diode (LED). The display 106 displays, for example, a state of the beacon device 100.

The input receiver 107 includes, for example, buttons and switches, receives a user's input operation, and outputs an electric signal corresponding to the input operation to the microcomputer 101.

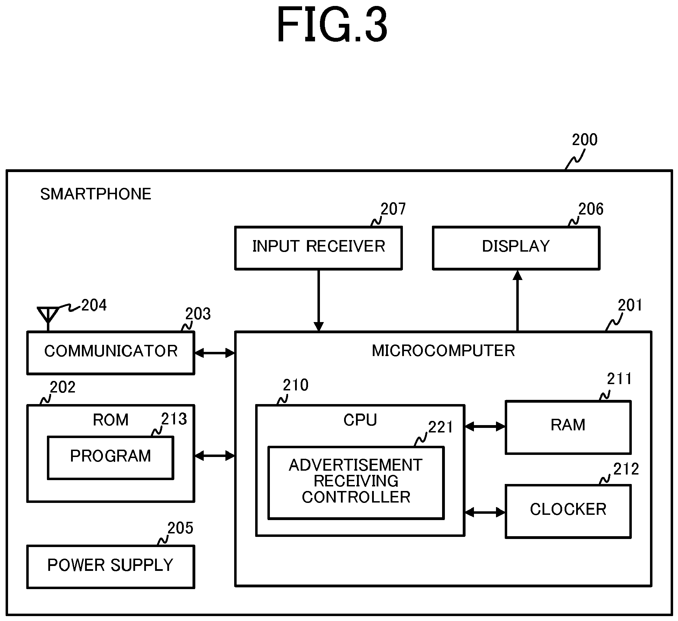

Next, a hardware configuration of the smartphone 200 according to the embodiment will be described. FIG. 3 is a block diagram illustrating a structure of the smartphone 200 according to the embodiment. The smart phone 200 includes a microcomputer 201, a ROM 202, a communicator 203, an antenna 204, a power supply 205, a display 206, and an input receiver 207.

The microcomputer 201 includes a CPU 210 as a processor, a RAM 211 as a memory apparatus, and a clocker 212, and the like. Note that the RAM 211 and the clocker 212 may be provided outside the computer 201 instead of the interior of the microcomputer 201. Moreover, the ROM 202, the communicator 203, the antenna 204, and the power supply 205 may be provided inside the microcomputer 201 instead of the exterior of the microcomputer 201.

The CPU 210 is a processor that executes various arithmetic processes and comprehensively controls the entire operation of the smartphone 200. The CPU 210 reads a control program from the ROM 202, loads such a program in the RAM 211 and executes various operations processes, such as arithmetic controls on various functions and displaying. The CPU 210 controls the communicator 203 for a data communication with the beacon device 100.

The RAM 211 is a volatile memory, such as an SRAM or a DRAM. The RAM 211 stores temporary data, and also stores various setting data.

The clocker 212 includes an oscillating circuit, a frequency divider circuit, and a clock circuit, and the like, and keeps the current time.

The ROM 202 is a non-volatile memory, or the like, and stores the control program and initial setting data. The control program contains a program 213 relating to the control for various processes to control a wireless communication with the beacon device 100.

The communicator 203 includes, for example, a radio frequency (RF) circuit, a baseband (BB) circuit, and a memory circuit. The communicator 203 demodulates, decodes, and the like, the wireless signals received via the antenna 204, and sends such signals to the CPU 210. Conversely, the communicator 203 modulates, codes, and the like, signals sent from the CPU 210, and transmits such signals to the exterior via the antenna 204. According to this embodiment, the communicator 203 is realized by a Bluetooth (registered trademark) controller that transmits and receives the wireless signals based on the BLE.

The power supply 205 includes, for example, batteries and a voltage converter circuit. The power supply 205 supplies the power at the operating voltage of each component in the smartphone 200. An example applied battery of the power supply 205 is a primary battery like a button-shape battery, or a secondary battery like a lithium-ion battery.

The display 206 includes, for example, a display panel, such as a Liquid Crystal Display (LCD) or an organic Electro-Luminescent (EL) display, and a driver that outputs, to the display panel, a drive signal in accordance with the type of the display panel based on the control signal from the microcomputer 201. The display 206 displays, for example, information received from the beacon device 100.

The input receiver 207 receives a user's input operation, and outputs an electric signal corresponding to such an input operation to the microcomputer 201. For example, as the input receiver 207, a touch sensor may be provided and laid over on the display panel of the display 206 so as to form a touch panel together with the display panel. In this case, the touch sensor detects a touch position and the way of touch relating to a touch operation by the user to the touch sensor, and outputs, to the microcomputer 201, an operation signal in accordance with the detected touch position and way of touch.

Next, a functional configuration of the CPU 110 of the beacon device 100 according to this embodiment will be described. As illustrated in FIG. 2, the CPU 110 functions as an advertisement transmitting controller 121. The function of the advertisement transmitting controller 121 may be achieved by a processor other than the microcomputer 101 like the CPU of the communicator 103.

The CPU 110 as the advertisement transmitting controller 121 controls the communicator 103 to broadcast advertisement packets on which data with a first maximum size can be delivered. In this example, the advertisement packets are an example of first transmission information to be transmitted by the beacon device 100, and are transmitted so as to notify the smartphone 200 of the presence of the beacon device 100.

For example, the CPU 110 executes a setting (extended advertisement setting) for specifying the type of the advertisement packets to be transmitted, a transmission time interval of the advertisement packets, and information to be delivered on the advertisement packets. In this example, the CPU 110 sets "ADV_IND" as the type of the advertisement packets. "ADV_IND" is a type of the advertisement packets to notify many and unspecified devices of the presence of the beacon device, and to accept, when a connection request is received, such a connection request. This causes the communicator 103 to broadcast the advertisement packets that have a type which is "ADV_IND" at the set transmission time interval. Note that according to the BLE, communications are performed through 40 channels obtained by dividing a frequency band between 2.4 GHz to 2.48 GHz by a width that is 2 MHz. Numbers "0" to "39" are allocated to these 40 channels, respectively, and the channels "0" to "36" are utilized for data communication, while the channels "37" to "39" are utilized for transmitting and receiving advertisement packets. Hence, the communicator 103 broadcasts the advertisement packets through the channels "37" to "39" at the set transmission time interval.

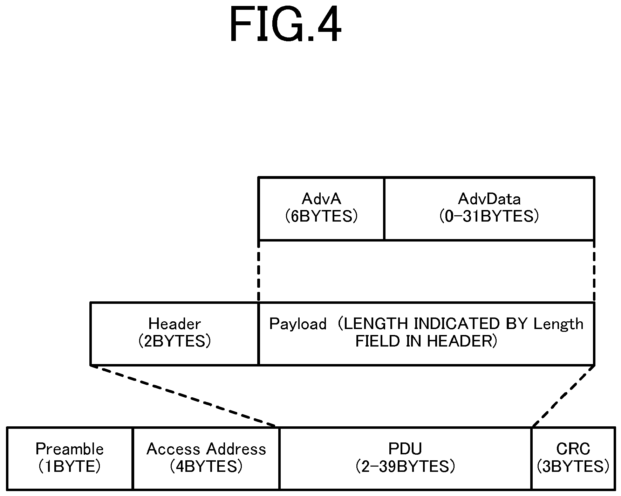

FIG. 4 illustrates an example of a structure of the advertisement packets according to this embodiment. As illustrated in FIG. 4, the Protocol Data Unit (PDU) of the advertisement packets in a link layer is in a size of 2 to 39 bytes, and includes a header (Header) of 2 bytes, and a payload (Payload) of 6 to 37 bytes. The type "ADV_IND" of the advertisement packets is specified by the header. Moreover, the payload includes an advertisement address (AdvA) of 6 bytes that indicates the address of the beacon device 100, and advertising data (AdvData) of 0 to 31 bytes. The size of the advertising data is 31 bytes at maximum (the first maximum size) because of the restriction of the payload of one packet.

When the communicator 103 receives a scan request in accordance with the advertisement packets from the smartphone 200 that received the advertisement packets, the CPU 110 controls the communicator 103, and transmits, to the smartphone 200, extended advertisement packets on which data with a second maximum size that is larger than the first maximum size can be delivered.

When, for example, receiving the scan request in accordance with the advertisement packets from the smartphone 200 that has received the advertisement packets, the communicator 103 transmits, to the smartphone 200, a scan response that contains predetermined information indicating the presence of data to be delivered on the extended advertisement packets and to be transmitted.

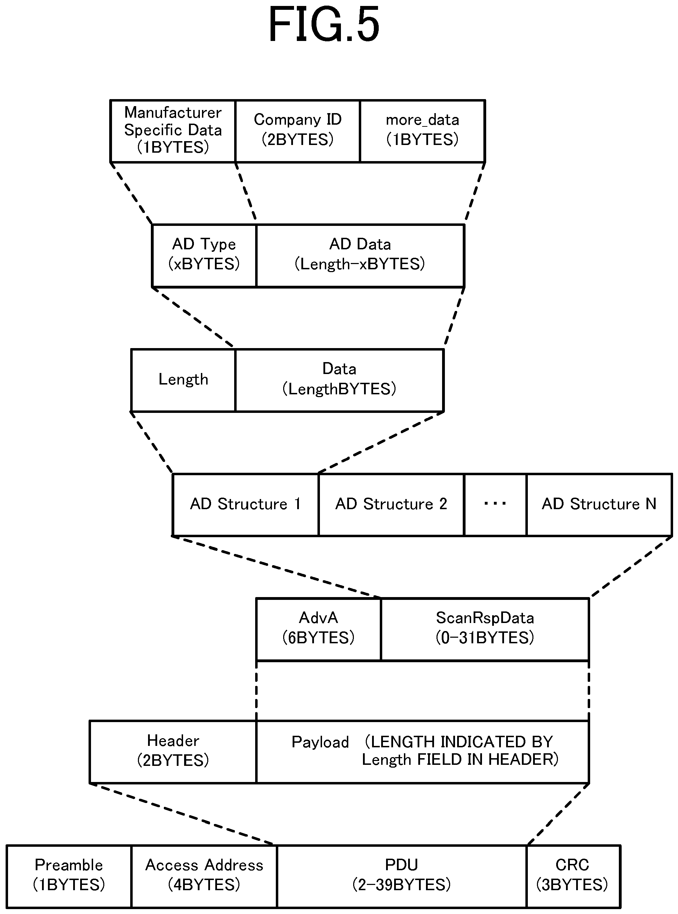

FIG. 5 illustrates an example of a structure of the scan response according to this embodiment. As illustrated in FIG. 5, the packets of the scan response are formed like the advertisement packets illustrated in FIG. 4. According to this embodiment, the scan response contains AD Data that has an AD Type which is "Manufacturer Specific Data". The AD Type indicates a type of the AD Data, and "Manufacturer Specific Data" indicates that the AD Data is data that can be optionally defined by a company. The AD Data that has the AD Type which is "Manufacturer Specific Data" may contain "Company ID" for identifying a company, and optional data. According to this embodiment, the AD Data contains the "Company ID" and also predetermined information that is extended information (more_data). When, for example, "1" is set in the field of the extended information, this indicates the presence of data to be delivered on the advertisement packets and to be transmitted.

When receiving the scan request from the smartphone 200, the communicator 103 outputs, to the CPU 110, a scan request received notification indicating that the scan request is received. Next, when receiving the scan request received notification from the communicator 103, the CPU 110 executes again the extended advertisement setting. In this example, the CPU 110 sets the type of the advertisement packets as "AUX_ADV_IND" applied for the extended advertisement packets, and sets data to be delivered on the extended advertisement packets. Example data to be delivered on the extended advertisement packets is advertisement information relating to products and services that are being sold at a store when the beacon device 100 is installed in the store. Hence, the communicator 103 transmits, through channels "37" to "39", the advertisement packets that have a type which is "ADV_EXT_IND" and which specifies channels for transmission of the extended advertisement packets among channels "0" to "36". Subsequently, the communicator 103 transmits, to the smartphone 200, the extended advertisement packets that have a type which is "AUX_ADV_IND" through the channels specified by the advertisement packets that have a type which is "ADV_EXT_IND".

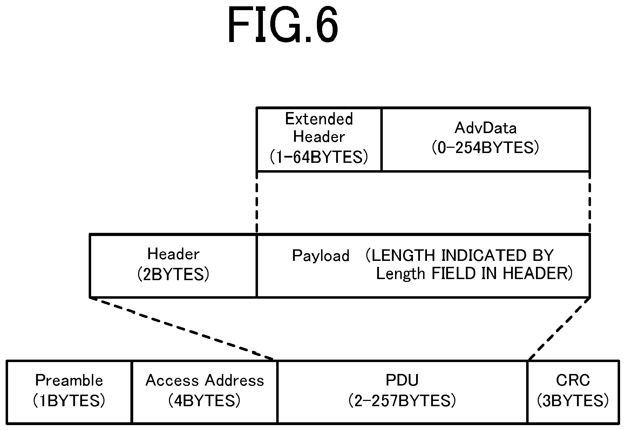

FIG. 6 illustrates an example of a structure of the extended advertisement packets according to this embodiment. As illustrated in FIG. 6, the PDU of the extended advertisement packets in a link layer is in a size that is 2 to 257 bytes, and contains a header (Header) that is 2 bytes and a payload (Payload) that is 255 bytes at maximum. Moreover, the payload contains an extended header (Extended Header) that is 64 bytes at maximum and advertising data (AdvData) that is 254 bytes at maximum. Regarding the size of the advertising data, the maximum size varies depending on the size of the extended header, and is 254 bytes (a second maximum size) at maximum.

Next, a functional configuration of the CPU 210 of the smartphone 200 according to this embodiment will be described. As illustrated in FIG. 3, the CPU 210 functions as an advertisement receiving controller 221. The function of the advertisement receiving controller 221 may be achieved by a processor other than the microcomputer 201 like the CPU of the communicator 203.

The CPU 210 as the advertisement receiving controller 221 controls the communicator 203, and receives the advertisement packets broadcasted from the beacon device 100. The CPU 210 controls the communicator 203, and transmits a scan request in response to the received advertisement packets. Next, the CPU 210 controls the communicator 203, and receives the extended advertisement packets from the beacon device 100 that has received the scan request.

First, for example, the CPU 210 executes a setting (extended scan setting) for receiving the extended advertisement packets. Next, the communicator 203 receives, through the channels "37" to "39", the advertisement packets transmitted from the beacon device 100. When receiving the advertisement packets, the communicator 203 transmits the scan request to the beacon device 100. Subsequently, when receiving the scan request from the beacon device 100, the communicator 203 outputs, to the CPU 210, an advertisement notification indicating that the advertisement packets has been received. When receiving the advertisement notification from the communicator 203, the CPU 210 obtains data on the scan response received by the communicator 203, and determines whether or not the extended information is contained. When the scan response contains the extended information, the CPU 210 continues the scanning, and waits for an extended advertisement notification from the communicator 203.

Conversely, after receiving the scan response, the communicator 203 receives, through the channels "37" to "39", the advertisement packets transmitted from the beacon device 100 and having a type that is "ADV_EXT_IND". Next, the communicator 203 receives, through the channel specified by the received advertisement packets, the extended advertisement packets that have a type which is "AUX_ADV_IND". When receiving the extended advertisement packets, the communicator 203 outputs, to the CPU 210, the advertisement notification indicating that the advertisement packets has been received. When receiving the extended advertisement notification from the communicator 203, the CPU 210 obtains data on the extended advertisement packets which has been received by the communicator 203, and displays the data on the display 206.

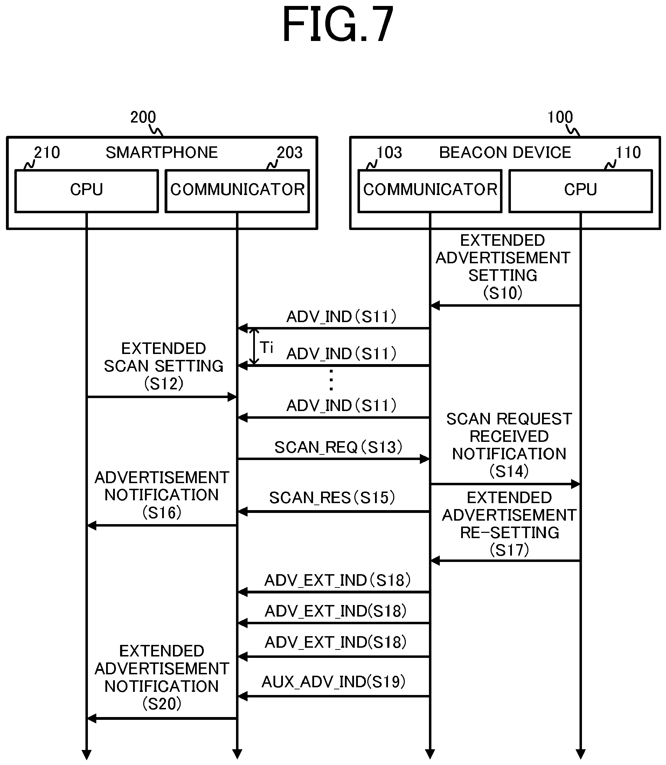

Next, an operation of the wireless communication system 1 according to this embodiment will be described. FIG. 7 is a sequence diagram illustrating an example of an advertisement operation of the wireless communication system 1 according to this embodiment. According to the example as illustrated in FIG. 7, operations of the CPU 110 and communicator 103 of the beacon device 100, and those of the CPU 210 and communicator 203 of the smartphone 200 will be described.

First, the CPU 110 of the beacon device 100 executes the extended advertisement setting (step S10). When the extended advertisement setting is executed in the step S10, the communicator 103 transmits the advertisement packets that have a type which is "ADV_IND" at a set transmission time interval Ti (step S11).

The CPU 210 of the smartphone 200 executes the extended scan setting (step S12), for example, for each predetermined time, or in response to an event such that a predetermined date and time comes or a user gives an instruction. When the extended scan setting is executed in the step S12, the communicator 203 starts scanning, and transmits, when receiving the advertisement packets from the beacon device 100, the scan request (SCAN_REQ) to the beacon device 100 (step S13).

When receiving the scan request from the smartphone 200, the communicator 103 of the beacon device 100 outputs the scan request received notification to the CPU 110 (step S14). Next, the communicator 103 transmits, to the smartphone 200, the scan response (SCAN_RES) that contains the extended information (step S15).

When receiving the scan response from the beacon device 100, the communicator 203 of the smartphone 200 outputs the advertisement notification to the CPU 210 (step S16). When receiving the advertisement notification, the CPU 210 obtains the data on the scan response that has been received by the communicator 203, and continues, when determining that the extended information is contained, the scanning and waits for the extended advertisement notification.

When receiving the scan response received notification from the communicator 103 in the step S14, the CPU 110 of the beacon device 100 executes again the extended advertisement setting (step S17). Next, when the extended advertisement setting is executed again in the step S17, the communicator 103 transmits, through the channels "37" to "39", the advertisement packets that have a type which is "ADV_EXT_IND" that specifies the channels for transmitting the extended advertisement packets (step S18). The communicator 103 transmits, through the channels specified by the advertisement packets transmitted in the step S18, the extended advertisement packets that have a type which is "AUX_ADV_IND" (step S19).

When receiving the extended advertisement packets, the communicator 203 of the smartphone 200 outputs the extended advertisement notification to the CPU 210 (step S20). When receiving the extended advertisement notification, the CPU 210 obtains the data on the extended advertisement packets, and displays the data on the display 206.

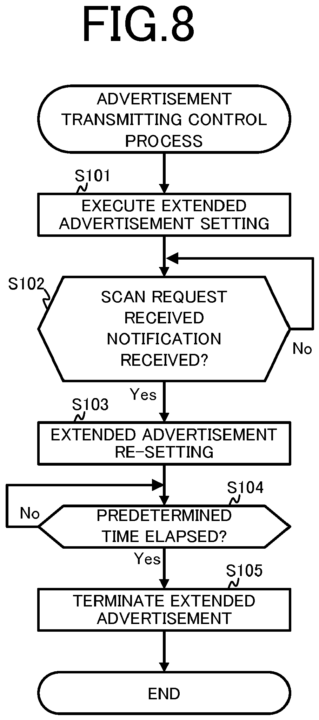

Next, an operation of the beacon device 100 according to this embodiment will be described in detail. FIG. 8 is an example of a flowchart illustrating a process flow for an advertisement transmitting control executed by the CPU 110 of the beacon device 100 according to this embodiment. The CPU 110 executes this process, for example, for each predetermined time or in response to an event such that a predetermined date and time comes.

First, the CPU 110 executes the extended advertisement setting (step S101). Next, the CPU 110 determines whether or not the scan request received notification is received from the communicator 103 (step S102). The CPU 110 stands by until the scan request received notification is received (step S102: NO).

When receiving the scan request received notification (step S102: YES), the CPU 110 executes the extended advertisement setting again (step S103).

The CPU 110 determines whether or not a predetermined time has elapsed (step S104). The CPU 110 stands by until determining that the predetermined time has elapsed (step S104: NO). Conversely, when determining that the predetermined time has elapsed (step S104: YES), the CPU 110 instructs the communicator 103 to terminate the extended advertisement setting (step S105). Subsequently, this process is completed.

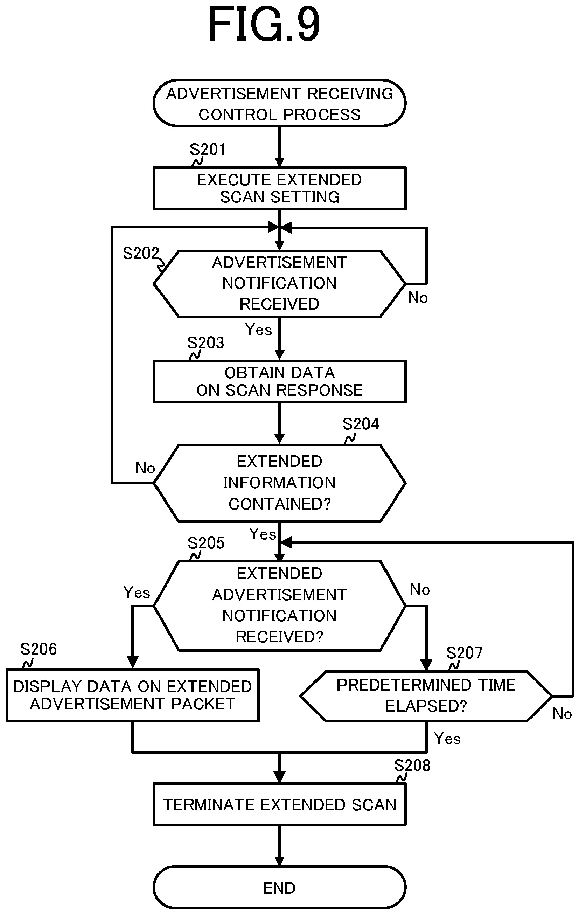

Next, an operation of the smartphone 200 according to this embodiment will be described in detail. FIG. 9 is an example of a flowchart illustrating a process flow for an advertisement receiving control by the CPU 210 of the smartphone 200 according to this embodiment. The CPU 210 starts this process, for example, for each predetermined time or in response to an event such that a predetermined date and time comes or the user gives an instruction.

The CPU 210 of the smartphone 200 executes the extended scan setting (step S201). Next, the CPU 210 determines whether or not the advertisement notification is received from the communicator 203 (step S202). The CPU 210 stands by until the advertisement notification is received (step S202: NO).

When receiving the advertisement notification (step S202: YES), the CPU 210 obtains the data on the scan response received by the communicator 203 (step S203). Next, the CPU 210 determines whether or not the data obtained in the step S203 contains the extended information (step S204).

When determining that the extended information is contained (step S204: YES), the CPU 210 determines whether or not the extended advertisement notification is received from the communicator 203 (step S205). Conversely, when determining that the extended information is not contained (step S204: NO), the CPU 210 returns the process to the step S202, and stands by until receiving the advertisement notification.

When determining that the extended advertisement notification is received (step S205: YES), the CPU 210 displays the data contained in the extended advertisement on the display 206 (Step S206). Next, the CPU 210 instructs the communicator 203 to terminate the extended scanning (step S208), and completes this process.

When determining that the extended advertisement notification is not received (step S205: NO), the CPU 210 determines whether or not a predetermined time has elapsed after receiving the advertisement notification (step S207). When determining that the predetermined time has not elapsed yet (step S207: NO), the CPU 210 returns the process to the step S205, and stands by until receiving the extended advertisement notification. Conversely, when determining that the predetermined time has elapsed (step S207: YES), the CPU 210 instructs the communicator 203 to terminate the extended scanning (step S208), and completes this process.

As described above, the beacon device 100 according to this embodiment first broadcasts advertisement packets on which data of 31 bytes at maximum can be delivered like conventional advertisement packets. Next, when receiving the scan request from the smartphone 200, such a beacon device transmits, to the smartphone 200, extended advertisement packets on which data of 254 bytes at maximum can be delivered. Hence, in comparison with a case in which transmission of the extended advertisement packets is kept although there is no smartphone 200 near the beacon device 100, wasteful power consumption can be suppressed, but a larger amount of data is transmittable.

Moreover, the beacon device 100 according to this embodiment transmits conventional advertisement packets that have a type "ADV_IND" before transmitting extended advertisement packets. Accordingly, when the smartphone 200 is compatible with Bluetooth (registered trademark) of an old version but is not compatible with Bluetooth (registered trademark) 5, the minimum requisite information is at least obtainable from the advertisement packets that have a type which is "ADV_IND".

Moreover, the beacon device 100 according to this embodiment transmits, when receiving a scan request from the smartphone 200, a scan response that contains extended information indicating that the presence of data to be delivered on the extended advertisement packets and to be transmitted to the smartphone 200. Hence, when the received scan response contains the extended information, the smartphone 200 determines that information is to be continuously broadcasted, and is capable of receiving the extended advertisement packets from the beacon device 100.

Note that the present disclosure is not limited to the above-described embodiment, and various modifications can be made.

For example, in the above-described embodiment, the description has been given of an example case in which the beacon device 100 transmits the scan response that contains the extended information indicating the presence of the data to be delivered on the extended advertisement packets and to be transmitted to the smartphone 200. However, the scheme for the beacon device 100 to inform a device therearound of the presence of the data to be delivered on the extended advertisement packets and to be transmitted is not limited to this example. For example, the beacon device 100 may have the extended information contained in the advertisement packets which are transmitted in the advertisement operation in the step S11 of Embodiment 1 illustrated in FIG. 7 and which have a type that is "ADV_IND".

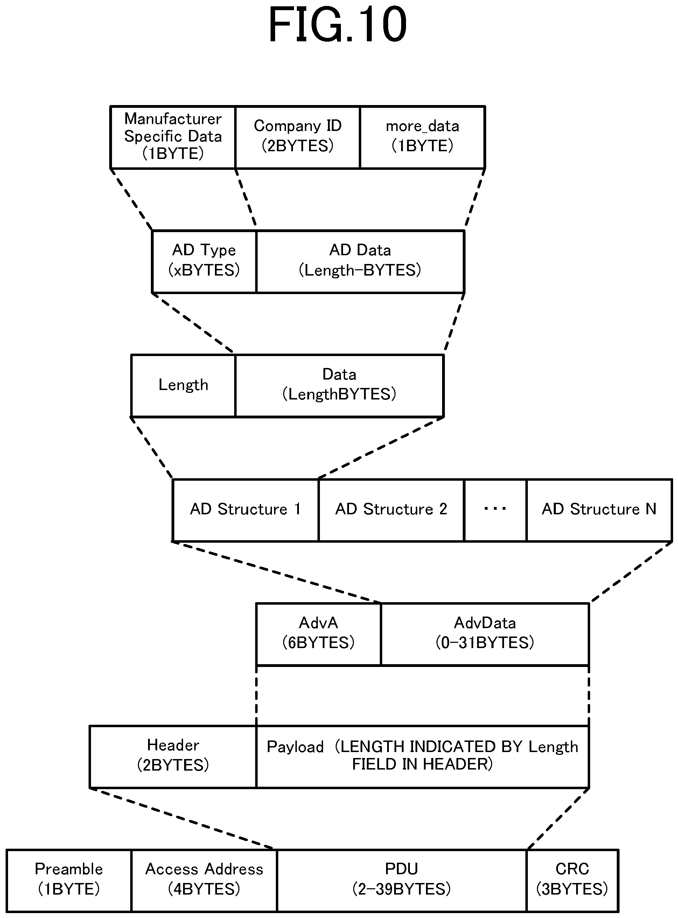

FIG. 10 illustrates an example of a structure of advertisement packets according to this modified example. As illustrated in FIG. 10, the advertisement packets employ the similar structure as the advertisement packets and the scan response illustrated in FIGS. 4 and 5. The advertisement packets illustrated in FIG. 10 include AD Data which has the AD Type that is "Manufacturer Specific Data" and which contains extended information (more data) in addition to the "Company ID".

As described above, the beacon device 100 has the extended information contained in the advertisement packets which have a type that is "ADV_IND". This enables the smartphone 200 to determine whether or not the extended advertisement packets are receivable when receiving the advertisement packets that have a type which is "ADV_IND". Next, the smartphone 200 transmits the scan request when being compatible with Bluetooth (registered trademark) 5, and does not transmit the scan request when not being compatible with Bluetooth (registered trademark) 5. Accordingly, the beacon device 100 is capable of transmitting the extended advertisement packets to only the smartphone 200 that is compatible with Bluetooth (registered trademark) 5 while suppressing wasteful power consumption.

Note that in the above-described modified example, the beacon device 100 may have no extended information contained in the scan response.

Moreover, in the above-described embodiment, the description has been given of an example case in which the beacon device 100 and the smartphone 200 wirelessly communicate with each other. However, devices that wirelessly communicate with each other are not limited to these examples, and may be electronic apparatuses with a wireless communication function, such as a smartphone, a mobile phone, a Personal Computer (PC), a Personal Digital Assistant (PDA), an electronic timepiece, or a smartwatch.

Moreover, in the above-described embodiment, the description has been given of an example case in which the CPUs 110 and 210 execute the control operation. However, the control operation is not limited to a software control by the CPUs 110 and 210, and some of or all of the control operation may be executed using a hardware configuration like a special-purpose logic circuit.

Furthermore, in the above description, the ROMs 102 and 202 which are non-volatile memories like flash memories have been described as a non-transitory computer-readable media that store the programs 113 and 213 relating to the wireless control process. However, the non-transitory computer-readable media are not limited to these examples, and a non-transitory portable storage medium, such as a Hard Disk Drive (HDD), a Compact Disc Read-Only Memory (CD-ROM), or a Digital Versatile Disc (DVD) is also applicable. In addition, carrier waves are also applicable to the embodiment as a medium that provides the data on the programs according to the embodiment via a communication line.

Still further, the specific details on the structure, the control procedure, the display example, and the like described in the above embodiment can be changed as appropriate without departing from the scope of the present disclosure.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A wireless communication device (100) comprising:
a wireless communicator (103) that wirelessly communicates with other wireless communication device (200); and
a processor (101) that
controls the wireless communicator (103) to broadcast first transmission information on which data with a first maximum size is deliverable, and
controls, upon the wireless communicator (103) receiving a request in response to the first transmission information from the other wireless communication device (200) that received the first transmission information, the wireless communicator (103) to transmit second transmission information on which data with a second maximum size is deliverable to the other wireless communication device (200), the second maximum size being larger than the first maximum size.

2. The wireless communication device (100) according to claim 1, wherein the wireless communicator (103) transmits, upon receiving the request in response to the first transmission information from the other wireless communication device (200) that received the first transmission information, a response to the other wireless communication device (200), the response containing predetermined information that indicates a presence of data that is to be delivered on the second transmission information and then transmitted.

3. The wireless communication device (100) according to claim 1, wherein the wireless communicator (103) superimposes predetermined information on the first transmission information and transmits the first transmission information on which the predetermined information is delivered, the predetermined information indicating a presence of data to be delivered on the second transmission information and then transmitted.

4. A wireless communication device (100) comprising:
a wireless communicator (103) that wirelessly communicates with other wireless communication device (200); and
a processor (101) that
controls the wireless communicator (103) to receive first transmission information on which data with a first maximum size is deliverable, the first transmission information being broadcasted from the other wireless communication device (200),
controls the wireless communicator (103) to transmit a request in response to the received first transmission information, and
controls the wireless communicator (103) to receive, from the other wireless communication device (200) that received the request, second transmission information on which data with a second maximum size is deliverable, the second maximum size being larger than the first maximum size.

5. A wireless communication method executed by a wireless communication device (100) comprising a wireless communicator (103) for wirelessly communicating with other wireless communication device (200), the method comprising:
controlling the wireless communicator (103) to broadcast first transmission information on which data with a first maximum size is deliverable, and
controlling, upon the wireless communicator (103) receiving a request in response to the first transmission information from the other wireless communication device (200) that received the first transmission information, the wireless communicator (103) to transmit second transmission information on which data with a second maximum size is deliverable to the other wireless communication device (200), the second maximum size being larger than the first maximum size.

6. A wireless communication method executed by a wireless communication device (100) comprising a wireless communicator (103) for wirelessly communicating with other wireless communication device (200), the method comprising:
controlling the wireless communicator (103) to receive first transmission information on which data with a first maximum size is deliverable, the first transmission information being broadcasted from the other wireless communication device (200),
controlling the wireless communicator (103) to transmit a request in response to the received first transmission information, and
controlling the wireless communicator (103) to receive, from the other wireless communication device (200) that received the request, second transmission information on which data with a second maximum size is deliverable, the second maximum size being larger than the first maximum size.

7. A program causing a computer comprising a wireless communicator (103) for wirelessly communicating with other wireless communication device (200) to:
control the wireless communicator (103) to broadcast first transmission information on which data with a first maximum size is deliverable, and
control, upon the wireless communicator (103) receiving a request in response to the first transmission information from the other wireless communication device (200) that received the first transmission information, the wireless communicator (103) to transmit second transmission information on which data with a second maximum size is deliverable to the other wireless communication device (200), the second maximum size being larger than the first maximum size.

8. A program causing a computer comprising a wireless communicator (103) for wirelessly communicating with other wireless communication device (200) to:
control the wireless communicator (103) to receive first transmission information on which data with a first maximum size is deliverable, the first transmission information being broadcasted from the other wireless communication device (200),
control the wireless communicator (103) to transmit a request in response to the received first transmission information, and
control the wireless communicator (103) to receive, from the other wireless communication device (200) that received the request, second transmission information on which data with a second maximum size is deliverable, the second maximum size being larger than the first maximum size.
